Europäisches Patentamt

European Patent Office

Office européen des brevets

(11) Publication number: **0 341 216**

**A1**

(12) **EUROPEAN PATENT APPLICATION**

(21) Application number: **89830115.5**

(22) Date of filing: **14.03.89**

(51) Int. Cl.⁴: **F 02 M 23/04**

(30) Priority: **15.03.88 IT 6032588**

(43) Date of publication of application:
**08.11.89 Bulletin 89/45**

(84) Designated Contracting States: **DE ES FR GB GR**

(71) Applicant: **Boccioli, Paolo**
**Via Raffaele Marchesi, 9**
**I-06100 Perugia (IT)**

(72) Inventor: **Boccioli, Paolo**
**Via Raffaele Marchesi, 9**
**I-06100 Perugia (IT)**

(74) Representative: **Baldi, Claudio**
**Piazza Ghislieri, 3**
**I-60035 Jesi (Ancona) (IT)**

(54) **Improvement in carburation systems in internal-combustion engines by controlling the air intake.**

(57) A supplementary air inlet device (1-7) for an internal-combustion engine carburation system having an air inlet pipe (1) with a solenoid valve (7) controlled according to certain engine parameters. After valve (7) and before the connection of pipe (1) with the inlet manifold (2), there is provided an uncontrolled auxiliary air intake (4).

EP 0 341 216 A1

# Description

### Improvement in carburation systems in internal- combustion engines by controlling the air intake.

This invention relates to an improvement in carburation systems in internal-combustion engines by controlling the air intake

The invention is particularly suitable, though not exclusively so, for application in all "OTTO" cycle intake type internal-combustion engines, but this solution, though under less preferential conditions, may be used on "Diesel" engines as well.

It is a well known fact that using current technology it is necessary to control the quantity of air intake in the carburation system, above all the quality of air to the combustion chambers.

Well known techniques involve controlling the quantity of air which is sucked or taken in by compression, generally before the carburation system, and which more or less chokes the respective intake pipe directly (e.g. summer-winter).

A solution by the same inventor (Italian patent application no. 43523A/87) involves, in the case of intake systems with traditional carburetor (generally throttle type), the controlled intake of supplementary air, immediately after the throttle valve, according to the number of engine revs., by means of a spacer with a diaphragm which chokes and atomizes the gas mixture to the combustion chamber, with the immediate and controlled addition of this quantity of supplementary air after the throttle according to the respective number of engine revs. by activating the solenoid valve which opens and closes the supplementary pipe to supply a better fuel/comburent ratio so as to improve performance and reduce consumption.

It is evident from this solution that though on one hand the addition of diaphragms improves uniforming of fuel in the comburent (atomization), on the other it limits the yield quite considerable because of the inevitable obstacle represented by the diaphragm itself.

It is an object of the present invention to resolve the above problems and to provide a solution without the complication of the above diaphragms.

Another problem found in the above solution derives from the fact that with the use of an air inlet supplementary pipe, controlled by a solenoid valve, the control may only be carried out in specific "YES" - "NO" conditions, that is, either intake or non-intake, which in order to be efficient must obviously lead to a continuous opening and closing action, without avoiding the "POCKETS" caused by the condition of "SUPPLYING" or "NOT SUPPLYING" the supplementary air.

Another object of the present invention is to overcome this problem.

This and other objects are achieved with this invention according to the characteristics specified in the attached claims, resolving the problems indicated by means of a supplementary air inlet device, involving at least one supplementary air inlet pipe which is applied in an air inlet manifold before the combustion chamber of the type consisting of a solenoid valve control for the air intake which can open and close access to a corresponding air intake in said pipe according to specific engine or control systems operating conditions of the same by the driver, in which before these solenoid valve devices and after the connection of this supplementary air pipe, an auxiliary intake is fitted in this air inlet mainifold for the intake of non controlled auxiliary air in this pipe.

The advantages obtained with these characteristics consist essentially in that the system makes it possible to improve uniforming the supplementary air inlet without the "POCKETS" due to an "OPENING-CLOSING" system, since the supplementary inlet system "absorbs" the change from the open condition to the closed condition or viceversa.

These and other advantages will be illustrated in the detailed description that follows of preferred embodiments with the help of the attached drawings whose details are not intended as being limiting but only for purposes of illustration.

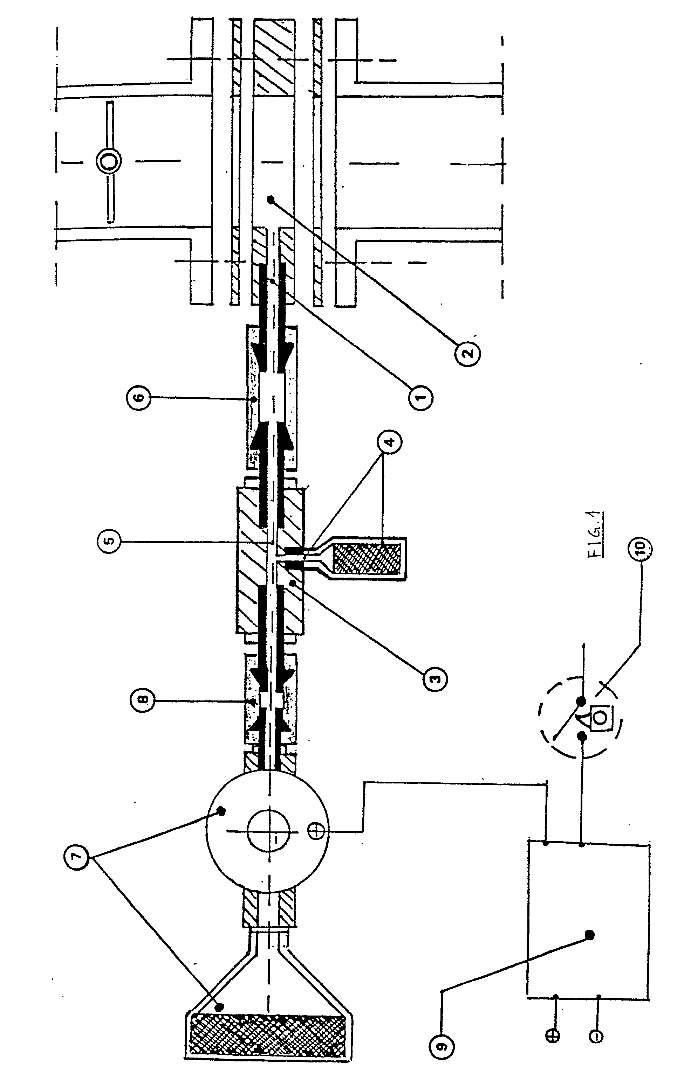

Figure 1 is a schematic view of a first form of application of the device to a carburetor intake type engine by means of a spacer between the carburetor and the manifold.

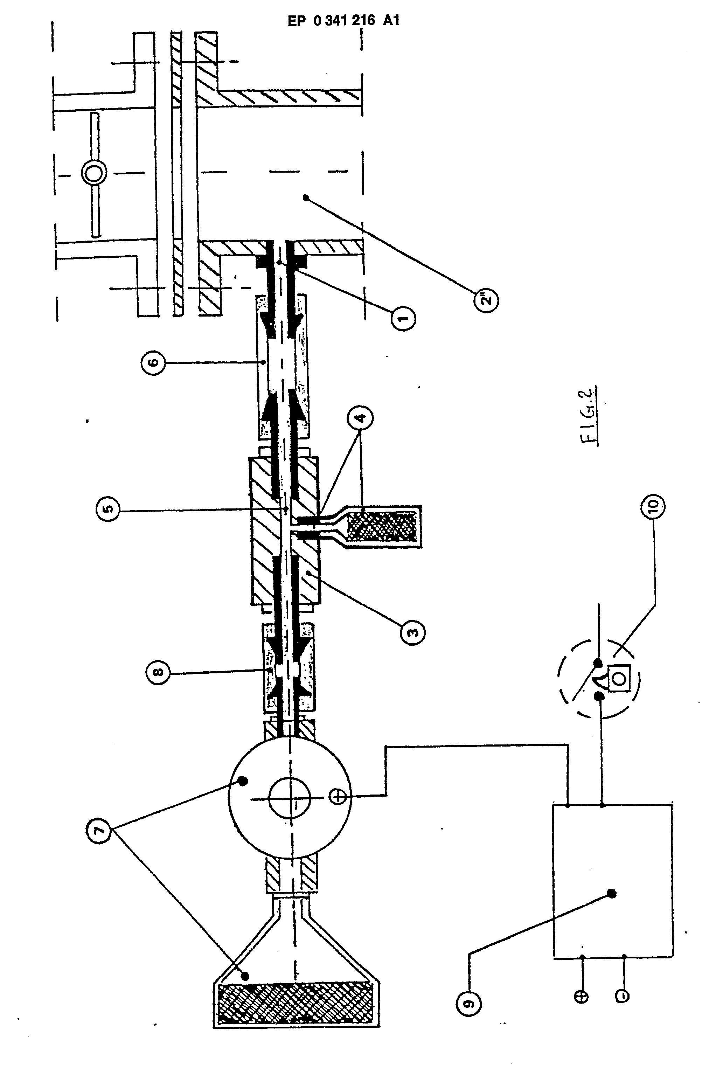

Figure 2 is the view of a solution similar to the previous but with the device fitted directly in the manifold.

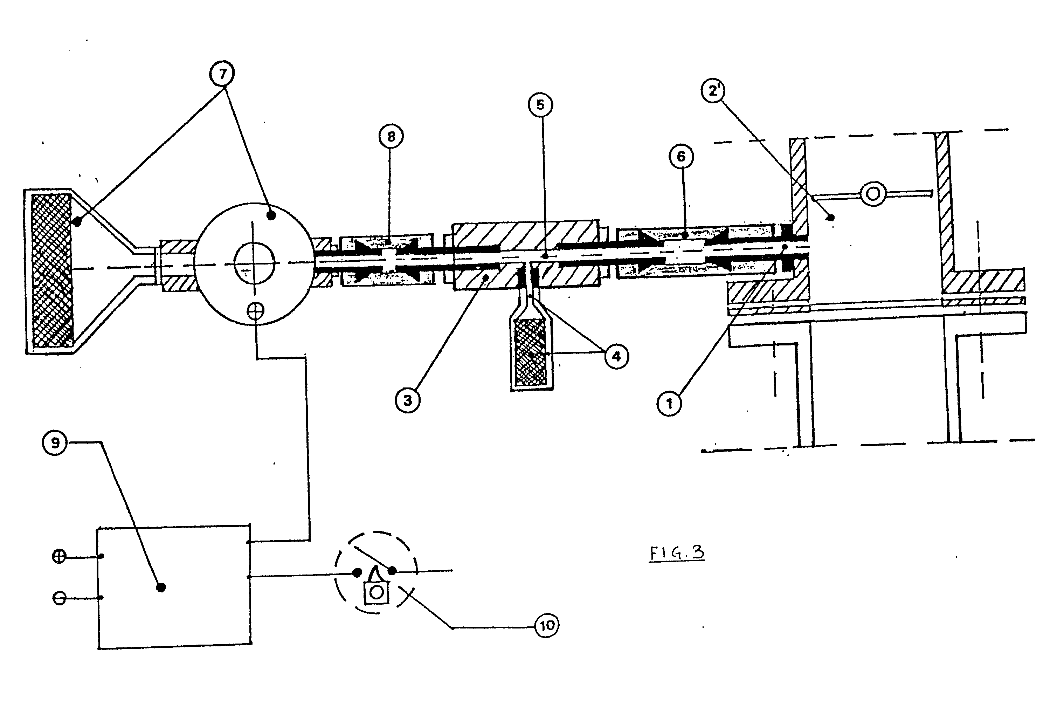

Figure 3 is a view of another variation to the previous solutions with the device fitted directly in the carburetor, immediately after the throttle valve.

By referring to the figures it is evident that the supplementary air inlet device involves at least one supplementary air inlet pipe (1) fitted in an air inlet manifold before the combustion chamber (2-2'-2"), with solenoid valve devices for controlling the air intake operatively which can open and close access to a corresponding air intake in this pipe (7) according to specific operating conditions of the engine or the control systems of the same by the driver (9-10) in which before these solenoid valve devices (7) and after the connection of the supplementary air pipe (1), in the air inlet mainifold (2-2'-2"), an auxiliary intake is fitted for intake of auxiliary air (4) in the pipe (1-5) which is not operatively controlled.

Advantageously this solenoid valve (7) is controlled by an electronic control board (9) which operates on the basis of current techniques, for example which may be programmed, and activated in turn by the battery-coil ignition or by any other means connected to the functional operation of the engine, which can for example transmit a value which is at least equivalent to the number of engine revs. or as these change.

It is nonetheless evident that this solenoid valve (7) may be connected by means of the control board (9) even to respective control devices which control the engine, as for example the movement of the accelerator or the brake.

In the solutions illustrated, the solenoid valve with the respective filter are indicated with (7) and the auxiliary air intake is obtained by means of a three-way (5,4) connection (3) whose external intake is fitted with a filter (4). The connection fits into the supplementary pipe line by means of two corresponding couplings (8-6).

Finally, it is evident from the figures that the supplementary pipe outlet (1) may be screwed directly to a threaded hold in the carburetor (1') or the manifold (1") or even on to a corresponding spacer (2).

Advantageously during acceleration and according to the number of revs. reached, the control board (9) will keep the solenoid valve open (7) so that a greater quantity of supplementary air enters the combustion chamber and viceversa, during deceleration and under a specific number of revs., the pipe is closed by the solenoid valve, while the auxiliary pipe remains open.

Just as advantageously this auxiliary pipe will be adjusted in the respective opening so as to choke or even close it, if it is not necessary in certain conditions.

**Claims**

1. Improvement in carburation systems in internal-combustion engines by control of the intake air, consisting of a supplementary air inlet device, involving at least one supplementary air inlet pipe (1) fitted on an air inlet manifold before the combustion chamber (2-2'-2") of the type with solenoid valve devices for controlling the intake air and which can operatively open and close access to a corresponding air intake in this pipe (7) according to specific engine or control system conditions by the driver (9-10) and characterized by the fact that after these solenoid valve devices (7) and before the connection of this supplementary air pipe (1) in this air inlet manifold (2-2'-2") an auxiliary intake for uncontrolled auxiliary air intake (4) is fitted in this pipe (1-5).

2. Improved device according to claim 1, characterized by the fact that the solenoid valve control devices (7) include programmable electronic control board devices (9) which can be activated to relay opening/closing impulses to this solenoid valve (7) according to the corresponding signals relayed electrically by the number of motor revs.

3. Improved device according to claim 1, characterized by the fact that these solenoid valve control devices (7) include programmable electronic control devices (9) which can be activated to relay opening/closing impulses to this solenoid valve (7) according to the corresponding signals relayed electrically by the contact breaker of the battery coil ignition.

4. Improved device according to claim 1 characterized by the fact that these solenoid valve control devices (7) include programmable electronic control board devices (9) which can be activated to relay opening/closing impulses to this solenoid valve (7) according to the corresponding signals relayed electrically by the control devices of engine operation.

5. Improved device according to claim 1, characterized by the fact that these solenoid valve control devices (7) include programmable electronic control board devices (9) which can be activated to relay opening/closing impulses to this solenoid valve (7) according to the corresponding signals relayed electrically by a specific position of the accelerator.

6. Improved device according to claim 1, characterized by the fact that these solenoid valve control devices (7) include programmable electronic control board devices (9) which can be activated to relay opening/closing impulses to this solenoid valve (7) according to the corresponding signals relayed electrically by a specific condition of the braking system.

7. Improved device according to claim 1, characterized by the fact that these solenoid valve control devices (7) include programmable electronic control board devices (9) which can be activated to relay opening/closing impulses to this solenoid valve (7) according to the corresponding signals relayed electrically by a specific accelerator position.

8. Improved device according to claim 1, characterized by the fact that these solenoid valve control devices (7) include programmable electronic control board devices (9) which can be activated to relay opening/closing impulses to this solenoid valve (7) according to the corresponding signals relayed electrically by:
- the number of engine revs. and
- the control devices for engine operation

9. Improved device according to claim 1, characterized by the fact that its was operatively designed to function so that during acceleration and according to the number of revs. reached, the control board (9) keeps the solenoid valve (7) open so that a greater quantity of air enters the combustion chamber and viceversa during deceleration and under a specific number of revs. the pipe is closed by the solenoid valve, while the auxiliary pipe (4) remains open.

10. Improved device according to claim 1, characterized by the fact that this auxiliary pipe (4) is adjustable in its opening, which can if necessary, be closed.

FIG.1

EP 0 341 216 A1

FIG.2

EP 0 341 216 A1

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 345 574 (IWAMI) <br> * Abstract; column 2, lines 65-68; column 3, lines 1-19,25-35,50-68; column 4, lines 48-52 * | 1,10 | F 02 M 23/04 |
| Y | | 2-9 | |
| Y | GB-A-2 152 242 (HONDA) <br> * Page 3, lines 1-17,35-52; page 4, lines 10-63; page 5, lines 4-52 * | 2,4-8 | |
| A | | 9 | |
| Y | US-A-4 072 137 (HATTORI) <br> * Abstract; column 3, lines 10-16 * | 3 | |
| Y | DE-A-1 576 460 (ATOX TRUST) <br> * Page 8, paragraph 4; page 9, last paragraph; pages 10,11 * | 9 | |
| X | US-A-4 545 331 (ITO) <br> * Figures 2,3; column 1, lines 42-66 * | 1 | |
| X | US-A-4 665 883 (AMANO) <br> * Column 3, lines 13-35; column 4, lines 8-15; figures 1,2 * | 1 | TECHNICAL FIELDS SEARCHED (Int. Cl.4) <br><br> F 02 M |
| A | DE-A-2 405 180 (FORD) <br> * Page 5, paragraph 2; page 7, paragraph 2, last 7 lines; figure * | 1 | |
| A | REVUE AUTOMOBILE SUISSE, no. 39, September 1980, page 11, Bern, US; "Carburateurs "électriques"" <br> * Page 11, top left figure "Lambda = 1-régulateur, carburateur inversé 36183 à soupape à air bypass" * | 3 | |

-/-

The present search report has been drawn up for all claims

| Place of search | Date of completion of the search | Examiner |
|---|---|---|
| THE HAGUE | 16-06-1989 | JORIS J.C. |

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 445 444  (NISSAN)<br>* Page 4, lines 24-37; page 5, lines 1-7 *<br>--- | 1,9 | |
| A | DE-A-2 553 678  (NISSAN)<br>* Page 18; page 19, first 2 lines, last paragraph *<br>--- | 1,9 | |
| A | GB-A-1 303 121  (NISSAN)<br>* Page 11, lines 76-90; page 2, lines 1-12; page 3, lines 118-130; page 4, lines 1-30,99-130; page 5, lines 1-47; page 6, lines 15-20,74-88 *<br>----- | 1 | |

TECHNICAL FIELDS SEARCHED (Int. Cl.4)

The present search report has been drawn up for all claims

| Place of search | Date of completion of the search | Examiner |
|---|---|---|
| THE HAGUE | 16-06-1989 | JORIS J.C. |

EPO FORM 1503 03.82 (P0401)